# EUROPEAN PATENT APPLICATION

(11) **EP 4 760 922 A1**
(43) Date of publication of application: **17.06.2026**
(21) Application number: 24895700.3
(22) Date of filing: 29.07.2024
(51) Int. Cl.: H01M 50/244, H01M 50/298, H01R 13/02

(54) **HIGH-VOLTAGE POWER DISTRIBUTION APPARATUS, BATTERY AND ELECTRICAL APPARATUS**

(30) Priority: 29.11.2023 CN 202323249361 U
(71) Applicant: Contemporary Amperex Technology Co., Limited, Ningde, Fujian 352100 (CN)
(72) Inventor: KANG, Hairong, Ningde, Fujian 352100 (CN); HE, Jia, Ningde, Fujian 352100 (CN); LI, Yuanxin, Ningde, Fujian 352100 (CN); ZHENG, Chenling, Ningde, Fujian 352100 (CN); LIU, Shaozhong, Ningde, Fujian 352100 (CN)
(74) Representative: Gong, Jinping
(86) International application number: PCT/CN2024/108220
(87) International publication number: WO 2025/112597

(57) **Abstract**

A high-voltage power distribution apparatus (400), a battery (100) and an electrical apparatus. The high-voltage power distribution apparatus (400) comprises a housing (40), a cover body (41) and a low-voltage terminal (42); the housing (40) has an opening; the cover body (41) seals the opening, and forms a mounting chamber with the housing (40); the low-voltage terminal (42) is integrated onto a target member, the target member being the housing (40) or the cover body (41); a first end of the low-voltage terminal (42) is exposed outside the mounting chamber, and a second end of the low-voltage terminal (42) is electrically connected to a low-voltage circuit inside the housing (40); at least one side wall of the target member is provided with a protective housing (43) having an outward opening; the first end of the low-voltage terminal (42) is located inside the protective housing (43). With regard to the high-voltage power distribution apparatus (400), the battery (100) and the electrical apparatus, the number of components inside the high-voltage power distribution apparatus (400) can be reduced to some extent, thus reducing the area occupied by the high-voltage power distribution apparatus (400).

## Description

The present application claims priority to Chinese Patent Application No. 202323249361.3 filed with China National Intellectual Property Administration on November 29, 2023 and entitled "HIGH-VOLTAGE POWER DISTRIBUTION DEVICE, BATTERY AND ELECTRIC DEVICE", which is incorporated herein by reference in its entirety.

### TECHNICAL FIELD

The present application pertains to the technical field of batteries, and in particular, to a high-voltage power distribution device, a battery, and an electric device.

### BACKGROUND

Due to advantages such as high capacity, small volume, light weight, low self-discharge coefficient, no pollution, and long service life, power batteries are now widely used in vehicle systems and energy storage systems. Currently, the battery system requires additional configuration of a high-voltage power distribution box, which utilizes a high-voltage power distribution device to manage and monitor the power distribution of the battery case. In the related art, the high-voltage power distribution device requires a large number of components.

### SUMMARY

An objective of embodiments of the present application is to provide a high-voltage power distribution device, a battery, and an electric device, aiming to solve the technical problem that the high-voltage power distribution device requires a large number of components.

### TECHNICAL SOLUTION

The technical solutions used in the embodiments of the present application are as follows:
In a first aspect, the embodiments of the present application provide a high-voltage power distribution device. The high-voltage power distribution device includes: a housing, having an opening; a cover body, covering the opening and defining, in an enclosing manner, a mounting cavity together with the housing; and a low-voltage terminal, integrated on a target member, where the target member is the housing or the cover body, a first end of the low-voltage terminal is exposed outside the mounting cavity, and a second end of the low-voltage terminal is electrically connected to a low-voltage circuit in the housing.

The high-voltage power distribution device according to the embodiments of the present application integrates the low-voltage terminal originally located in the low-voltage connector outside the high-voltage box into the housing or the cover body of the high-voltage box. Compared to the related art where the low-voltage connector is separately disposed, the need for a housing body part of the low-voltage connector can be eliminated, thereby reducing the number of components in the high-voltage power distribution device to a certain extent, decreasing the occupied area, and simplifying the assembly process of the high-voltage power distribution device. Additionally, the overall material usage of the high-voltage power distribution device is reduced, thereby lowering costs.

In some embodiments, at least one side wall of the target member is provided with a groove, and the first end of the low-voltage terminal is located in the groove. The target member is generally an insulating member. By adopting the solution according to the embodiments, the part of the low-voltage terminal exposed outside the target member can be located in the groove, such that the risk of foreign objects hooking onto or colliding with the low-voltage terminal can be reduced to a certain extent, and the risk of rainwater or the like falling onto the low-voltage terminal can be mitigated, thereby improving the use safety of the high-voltage power distribution device to a certain extent.

In some embodiments, at least one side wall of the target member is provided with a protective shell having an outward-facing opening, and the first end of the low-voltage terminal is located in the protective shell. By adopting the solution according to the embodiments, the part of the low-voltage terminal exposed outside the target member can be located in the protective shell, such that the risk of foreign objects hooking onto or colliding with the low-voltage terminal can be reduced to a certain extent, and the risk of rainwater or the like falling onto the low-voltage terminal can be mitigated, thereby improving the use safety of the high-voltage power distribution device to a certain extent.

In some embodiments, the protective shell is embedded on the target member. By adopting the solution according to the embodiments, the connection stability between the protective shell and the target member can be improved to a certain extent, while reducing the occupied space by the assembly of the protective shell and the target member.

In some embodiments, the protective shell at least partially protrudes from the side wall of the target member. In this way, the size of the protective shell is not limited by the dimension of the target member, facilitating design.

In some embodiments, a plurality of low-voltage terminals are provided and spaced apart from each other according to a preset arrangement manner, and the protective shell is provided with an identification structure configured to indicate the preset arrangement manner. Since different low-voltage terminals generally have different functions, terminals with the same function need to be correspondingly connected when the low-voltage terminals are connected to an external low-voltage device. Incorrect connections may damage the corresponding electronic components in the high-voltage power distribution device and/or the external low-voltage device. By adopting the solution according to the embodiments, the accuracy of the assembly direction can be improved to a certain extent when the connection terminals of the external low-voltage device are assembled with the low-voltage terminals, the risk of incorrect connections can be reduced to a certain extent, and the use safety can be improved. In addition, rework caused by incorrect connections can be reduced to a certain extent, and assembly efficiency can be improved to a certain extent.

In some embodiments, a plurality of low-voltage terminals are provided and spaced apart from each other according to a preset arrangement manner, the preset arrangement manner is that the low-voltage terminals are spaced apart in a first direction, and one end of the protective shell in the first direction is provided with a protruding part. The arrangement of the protruding part can serve the function of the above identification structure, and the protruding part has a simple structure, which facilitates design and processing. Moreover, the arrangement of the protruding part can enhance the local mechanical strength of the protective shell while increasing the thickness of the corresponding region, thereby facilitating the arrangement of structures such as a snap and a groove on the protective shell. The above snap, groove, and other structures may serve as auxiliary assembly structures for the external connection terminal and the low-voltage terminal, to improve the stability of the connecting structure between the external connection terminal and the low-voltage terminal after assembly.

In some embodiments, the protruding part is disposed on one end wall of the protective shell in the first direction. Since the protruding part is disposed in the manner described in the embodiments, in the first aspect, the operator can quickly identify the arrangement direction of the low-voltage terminals based on the position of the protruding part, thereby improving assembly efficiency to a certain extent; in the second aspect, the mechanical strength of the corresponding end wall can be enhanced; and in the third aspect, the arrangement of structures such as a snap and a groove on the end wall of the protective shell can also be facilitated.

In some embodiments, the protruding part and the protective shell are integrally formed. By adopting the solution according to the embodiments, the protruding part can be stably connected to the protective shell, thereby facilitating processing.

In some embodiments, a plurality of low-voltage terminals are provided and spaced apart from each other according to a preset arrangement manner, the preset arrangement manner is that the low-voltage terminals are spaced apart in a first direction, and structures of two ends of the protective shell in the first direction are different. In this way, by observing the structures of two ends of the protective shell in the first direction, the arrangement direction of the low-voltage terminals can be identified, such that the accuracy of the assembly direction can be improved to a certain extent when the connection terminals of the external low-voltage device are assembled with the low-voltage terminals, the risk of incorrect connections can be reduced to a certain extent, and the use safety can be improved. In addition, rework caused by incorrect connections can be reduced to a certain extent, and assembly efficiency can be improved to a certain extent. Meanwhile, by adopting the solution according to the embodiments, the structure on the protective shell can be made simpler compared to the above arrangement of the identification structure, thereby facilitating design and processing.

In some embodiments, a thickness of one end wall of the protective shell in the first direction is greater than a thickness of another end wall opposite to the one end wall. By adopting the solution according to the embodiments, the installation personnel can identify the arrangement direction of the low-voltage terminals simply by observing the thickness of the two end walls. In addition, the structure of the protective shell is simple, thereby facilitating design and processing.

In some embodiments, the protective shell is provided with a guide structure, the guide structure being configured to guide an external connection terminal to be inserted into the protective shell for electrical connection with the low-voltage terminal. By adopting the solution according to the embodiments, the assembly of the external connection terminal is facilitated, and the assembly efficiency can be improved to a certain extent when the external connection terminal is connected to the low-voltage terminal.

In some embodiments, the guide structure includes a guiding surface formed at the opening of the protective shell. By adopting the structure according to the embodiments, the guide structure has a simple structure, which facilitates design and processing.

In some embodiments, an area of an opening enclosed by the guiding surface gradually decreases from outside to inside in a depth direction of the protective shell. In this way, the guiding surface has a simple structure, which facilitates design and processing.

In some embodiments, the target member and the protective shell are both insulating members; and/or the target member and the protective shell are both injection-molded members. The target member and the protective shell are both insulating members, which can improve the use safety of the high-voltage power distribution device to a certain extent. The target member and the protective shell are injection-molded members that are easy to manufacture at low cost.

In some embodiments, the protective shell and the target member are integrally formed. In this way, the protective shell and the target member have a stable structure, facilitating processing.

In some embodiments, the second end of the low-voltage terminal is at least partially located in the mounting cavity and is in electrical contact with an output terminal of the low-voltage circuit. By adopting the solution according to the embodiments, the conductive member between the low-voltage terminal and the low-voltage circuit can be removed, thereby saving space in the housing.

In some embodiments, the second end of the low-voltage terminal is located in the side wall of the target member, and the second end of the low-voltage terminal is provided with an electrical contact part extending into the mounting cavity, the electrical contact part being in electrical contact with an output terminal of the low-voltage circuit. By adopting the solution according to the embodiments, the volume of the electrical contact part can be relatively small, thereby avoiding excessive occupation of the internal space of the housing.

In a second aspect, the embodiments of the present application provide a battery. The battery includes the high-voltage power distribution device according to any one of the above solutions. Since the battery according to the embodiments of the present application includes the high-voltage power distribution device of any one of the above solutions, the number of components in the high-voltage power distribution device can be reduced to a certain extent, and the area occupied by the high-voltage power distribution device is decreased, thereby facilitating the miniaturization design of the battery.

In a third aspect, the embodiments of the present application provide an electric device. The electric device includes the battery according to any one of the above solutions. Since the electric device according to the embodiments of the present application includes the battery of any one of the above solutions, the number of components in the high-voltage power distribution device can be reduced to a certain extent, and the area occupied by the high-voltage power distribution device and the battery is decreased, thereby facilitating the miniaturization design of the electric device.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or exemplary technologies are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a partial cross-sectional schematic structural diagram of a high-voltage power distribution device according to some embodiments of the present application;
FIG. 4 is a partial cross-sectional schematic structural diagram of a high-voltage power distribution device according to some other embodiments of the present application;
FIG. 5 is a partial schematic structural diagram of a cover body of a high-voltage power distribution device according to some other embodiments of the present application;
FIG. 6 is a partial schematic structural diagram of a cover body of a high-voltage power distribution device according to some other embodiments of the present application;
FIG. 7 is a schematic structural diagram from a side view of a cover body of a high-voltage power distribution device according to some other embodiments of the present application; and
FIG. 8 is a cross-sectional schematic structural diagram of the cover body of the high-voltage power distribution device shown in FIG. 7 along direction A-A.

Reference numerals in the detailed description are as follows:
1000: vehicle;
100: battery; 200: controller; 300: motor; 400: high-voltage power distribution device;
10: case; 11: first part; 12: second part; 20: battery cell; 40: housing; 41: cover body; 42: low-voltage terminal; 43: protective shell; 44: guide structure; 45: groove; 46: protruding part; 47: electrical contact part;
X: first direction; Y: depth direction.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "have", and any variations thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "and/or B" may denote: the presence alone, the simultaneous presence and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

Due to advantages such as high capacity, small volume, light weight, low self-discharge coefficient, no pollution, and long service life, power batteries are now widely used in vehicle systems and energy storage systems. Currently, the battery system requires additional configuration of a high-voltage power distribution box, which utilizes a high-voltage power distribution device to manage and monitor the power distribution of the battery case. In the related art, the high-voltage power distribution device requires a large number of components.

To ameliorate the above problem, the embodiments of the present application provide a high-voltage power distribution device. The high-voltage power distribution device integrates the low-voltage terminal originally located in the low-voltage connector outside the high-voltage box into the housing or the cover body of the high-voltage box. Compared to the related art where the low-voltage connector is separately disposed, the need for a housing body part of the low-voltage connector can be eliminated, thereby reducing the number of components in the high-voltage power distribution device to a certain extent, decreasing the occupied area, and simplifying the assembly process of the high-voltage power distribution device. Additionally, the overall material usage of the high-voltage power distribution device is reduced, thereby lowering costs.

The high-voltage power distribution device disclosed in the embodiments of the present application can be applied to batteries, electric devices that use batteries as the power source, or various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

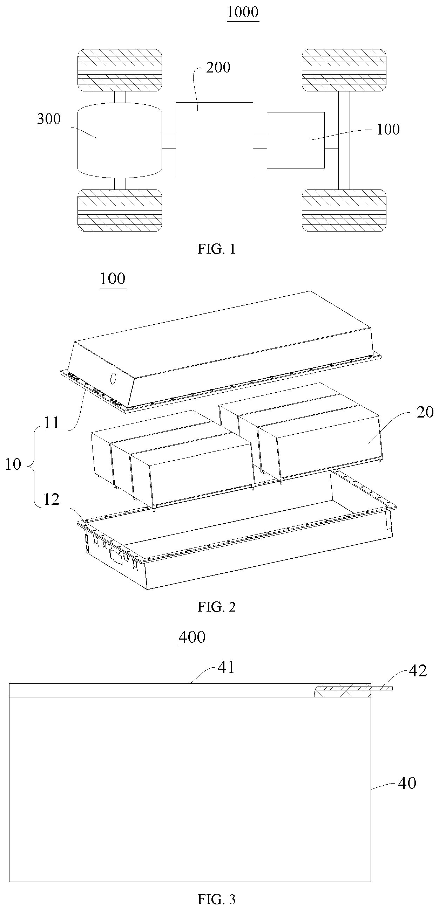

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source of the vehicle 1000. The vehicle 1000 may further include a controller 200 and a motor 300. The controller 200 is configured to control the battery 100 to supply power to the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of a variety of structures. In some embodiments, the case 10 may include a first part 11 and a second part 12. The first part 11 and the second part 12 are mutually lidded onto each other, and the first part 11 and the second part 12 jointly define an accommodating space for accommodating the battery cells 20. The second part 12 may be of a hollow structure with one end open, and the first part 11 may be of a plate-shaped structure. The first part 11 is lidded onto the open side of the second part 12, such that the first part 11 and the second part 12 jointly define the accommodating space. The first part 11 and the second part 12 may also each be of a hollow structure with one side open, and the open side of the first part 11 is lidded onto the open side of the second part 12. Certainly, the case 10 formed by the first part 11 and the second part 12 may be in various shapes, such as a cylindrical shape or a rectangular parallelepiped shape. In some cases, battery cells can also be directly installed in the vehicle without the need for a case or a housing body, that is, the formation of a battery pack is not required, and the structure of the vehicle body serves as the fixing structure for the battery cells.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

To improve the intelligence level of the battery 100, in addition to the above structure, many batteries 100 further include a high-voltage power distribution device. The high-voltage power distribution device is generally disposed outside the case, or may be disposed inside the case in some cases. Typically, a battery provided with a high-voltage power distribution device generally includes a plurality of battery cases, the battery cases including the above case and battery cells. The high-voltage power distribution device is capable of coupling the electrical energy output by a plurality of battery cases and distributing the electrical energy output by the plurality of battery cases to systems requiring high-voltage power supply, such as a motor controller, an electric compressor, and a PTC heater. The high-voltage power distribution device generally has current and voltage acquisition functions, and is capable of performing safety management on battery cases, achieving functions such as over-voltage protection, over-current protection, and over-temperature protection. Additionally, it also has the function of real-time monitoring of the high-voltage connection status and high-voltage insulation status.

The high-voltage power distribution device generally includes a high-voltage box and a low-voltage connector. The high-voltage box generally includes a housing, a current sensor, a high-voltage sampling module, a battery management unit (BMU), and the like. The current sensor, the high-voltage sampling module, and the battery management unit are generally all disposed in the housing. The current sensor can acquire current parameters of each battery case; the high-voltage sampling module can acquire the voltage of a high-voltage bus and monitor the insulation status of the high-voltage bus; and the battery management unit can perform information summary analysis, monitoring and management of the battery system of the entire electric vehicle, and interact with the outside.

As shown in FIG. 3, the embodiments of the present application provide a high-voltage power distribution device 400. The high-voltage power distribution device 400 includes a housing 40, a cover body 41, and a low-voltage terminal 42.

The housing 40 has an opening. The cover body 41 covers the opening and defines, in an enclosing manner, a mounting cavity together with the housing 40. The low-voltage terminal 42 is integrated on a target member. The target member is the housing 40 or the cover body 41. The first end of the low-voltage terminal 42 is exposed outside the mounting cavity, and the second end of the low-voltage terminal 42 is electrically connected to a low-voltage circuit in the housing 40.

As described above, some electronic components, such as a current sensor, a high-voltage sampling module, and a battery management unit, are generally provided inside the high-voltage power distribution device 400. The housing 40 is generally of a hollow structure with one side or one end open, and is configured to provide accommodating space for the electronic components in the high-voltage power distribution device 400. The cover body 41 is generally of a plate-shaped structure and is lidded onto the opening of the housing 40. Alternatively, the housing 40 and the cover body 41 may both be of a hollow structure with one side open, and the open side of the cover body 41 is lidded onto the open side of the housing 40, such that the housing and the cover body jointly define, in an enclosing manner, the above accommodating space. The mounting cavity is the above accommodating space, and may be in various shapes, such as a cylindrical shape or a rectangular parallelepiped shape.

In addition to the above electronic components, the high-voltage power distribution device 400 generally further includes some low-voltage circuits (such as a current detection circuit and a temperature detection circuit). These low-voltage circuits need to be connected to other external low-voltage devices (such as a control apparatus) through a low-voltage connector. The above low-voltage terminal 42 is a connection terminal that connects the low-voltage circuits in the high-voltage power distribution device 400 to other external low-voltage devices. The low-voltage terminal 42 may be electrically connected to the low-voltage circuit by welding, connector-based connection, or other means.

The high-voltage power distribution device 400 according to the embodiments of the present application integrates the low-voltage terminal 42, originally located in the low-voltage connector outside the high-voltage box, into the housing 40 or the cover body 41 of the high-voltage box. Compared to the related art where the low-voltage connector is separately disposed, the need for a housing body part of the low-voltage connector can be eliminated, thereby reducing the number of components in the high-voltage power distribution device 400 to a certain extent, decreasing the occupied area, and simplifying the assembly process of the high-voltage power distribution device 400. Additionally, the overall material usage of the high-voltage power distribution device 400 is reduced, thereby lowering costs.

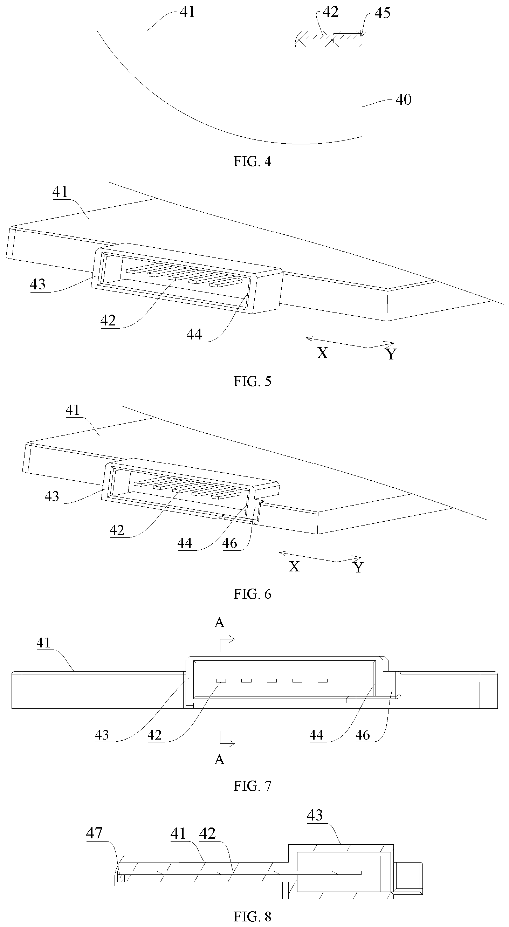

As shown in FIG. 4, in some embodiments, at least one side wall of the target member is provided with a groove 45, and the first end of the low-voltage terminal 42 is located in the groove 45.

The groove 45 may be directly formed on the side wall of the target member. For example, the groove is directly manufactured on the side wall of the target member by cutting, integral forming, or other means. Alternatively, a groove body may be additionally mounted on the side wall of the target member by bonding, welding, or other means.

The target member is generally an insulating member. By adopting the solution according to the embodiments, the part of the low-voltage terminal 42 exposed outside the target member can be located in the groove 45, such that the risk of foreign objects hooking onto or colliding with the low-voltage terminal 42 can be reduced to a certain extent, and the risk of rainwater or the like falling onto the low-voltage terminal 42 can be mitigated, thereby improving the use safety of the high-voltage power distribution device 400 to a certain extent.

As shown in FIG. 5, in some embodiments, at least one side wall of the target member is provided with a protective shell 43 having an outward-facing opening, and the first end of the low-voltage terminal 42 is located in the protective shell 43.

The protective shell 43 is of a hollow structure with one side open outward, and is generally an insulating member. Alternatively, the protective shell may be partially of an insulating structure, and partially of a non-insulating structure, which may be specifically determined according to use requirements.

By adopting the solution according to the embodiments, the part of the low-voltage terminal 42 exposed outside the target member can be located in the protective shell 43, such that the risk of foreign objects hooking onto or colliding with the low-voltage terminal 42 can be reduced to a certain extent, and the risk of rainwater or the like falling onto the low-voltage terminal 42 can be mitigated, thereby improving the use safety of the high-voltage power distribution device 400 to a certain extent.

In some embodiments, the protective shell 43 is embedded on the target member.

Being embedded means that the protective shell 43 is at least partially wrapped by the target member. The protective shell 43 and the target member may be connected in a detachable manner, or may be connected in a non-detachable manner. When the protective shell 43 is connected to the target member in a detachable manner, the groove 45 may be formed on the target member, and then the protective shell 43 is inserted into the groove 45. When the protective shell 43 is connected to the target member in a non-detachable manner, the target member may be directly cast outside the protective shell 43, or the groove 45 may be formed on the target member, and then the protective shell 43 is inserted into the groove 45. Subsequently, the relative positions of the protective shell 43 and the target member are fixed by welding or other means.

By adopting the solution according to the embodiments, the connection stability between the protective shell 43 and the target member can be improved to a certain extent, while reducing the occupied space of the assembly of the protective shell 43 and the target member.

In some embodiments, the protective shell 43 at least partially protrudes from the side wall of the target member.

The protective shell 43 at least partially protruding from the side wall of the target member may refer to the open end of the protective shell 43 extending beyond the side wall of the target member, that is, the opening of the protective shell 43 is located outside the side wall of the target member. Alternatively, it may refer to a part of the protective shell 43 in another direction extending beyond the side wall of the target member. For example, the side wall of the protective shell 43 in the direction perpendicular to the extension direction of the low-voltage terminal 42 extends beyond the side wall of the target member.

In this way, the size of the protective shell 43 is not limited by the dimension of the target member, facilitating design.

In some embodiments, a plurality of low-voltage terminals 42 are provided and spaced apart from each other according to a preset arrangement manner. The protective shell 43 is provided with an identification structure configured to indicate the preset arrangement manner.

The preset arrangement manner may be that the low-voltage terminals are spaced apart along a straight line, spaced apart along a circumference, or may be another arrangement manner.

Since different low-voltage terminals 42 generally have different functions, terminals with the same function need to be correspondingly connected when the low-voltage terminals 42 are connected to an external low-voltage device. Incorrect connections may damage the corresponding electronic components in the high-voltage power distribution device 400 and/or the external low-voltage device. By adopting the solution according to the embodiments, the accuracy of the assembly direction can be improved to a certain extent when the connection terminals of the external low-voltage device are assembled with the low-voltage terminals 42, the risk of incorrect connections can be reduced to a certain extent, and the use safety can be improved. In addition, rework caused by incorrect connections can be reduced to a certain extent, and assembly efficiency can be improved to a certain extent.

As shown in FIG. 6, in some embodiments, a plurality of low-voltage terminals 42 are provided and spaced apart from each other according to a preset arrangement manner, and the preset arrangement manner is that the low-voltage terminals are spaced apart in the first direction X. One end of the protective shell 43 in the first direction X is provided with a protruding part 46.

The first direction X may be a length direction, a width direction, or another direction of the target member, and may be specifically determined according to use requirements.

The protruding part 46 may be a protruding block or a protruding point, or may be another structure. The protruding part 46 may be disposed on the end wall or the side wall of the corresponding end part. The protruding part 46 may be integrally formed on the protective shell 43, i.e., as a part of the protective shell 43. Alternatively, the protruding part may be disposed independently of the protective shell 43 and mounted on the protective shell 43 by insertion, bonding, or other means.

The arrangement of the protruding part 46 can serve the function of the above identification structure, and the protruding part has a simple structure, which facilitates design and processing. Moreover, the arrangement of the protruding part 46 can enhance the local mechanical strength of the protective shell 43 while increasing the thickness of the corresponding region, thereby facilitating the arrangement of structures such as a snap and a groove 45 on the protective shell 43. The above snap, groove 45, and other structures may serve as auxiliary assembly structures for the external connection terminal and the low-voltage terminal 42, to improve the stability of the connecting structure between the external connection terminal and the low-voltage terminal 42 after assembly.

As shown in FIG. 6, in some embodiments, the protruding part 46 is disposed on one end wall of the protective shell 43 in the first direction X.

Since the protruding part 46 is disposed in the manner described in the embodiments, in the first aspect, the operator can quickly identify the arrangement direction of the low-voltage terminals 42 based on the position of the protruding part 46, thereby improving assembly efficiency to a certain extent; in the second aspect, the mechanical strength of the corresponding end wall can be enhanced; and in the third aspect, the arrangement of structures such as a snap and a groove 45 on the end wall of the protective shell 43 can also be facilitated.

In some embodiments, the protruding part 46 and the protective shell 43 are integrally formed.

Being integrally formed means that the protruding part 46 and the protective shell 43 form a whole, and the protruding part and the protective shell may be simultaneously manufactured through an integral forming process. Alternatively, a whole may be first manufactured through an integral forming process, and then the protruding part 46 is processed on the whole by cutting or other means.

By adopting the solution according to the embodiments, the protruding part 46 can be stably connected to the protective shell 43, thereby facilitating processing.

As shown in FIGs. 6 and 7, in some embodiments, a plurality of low-voltage terminals 42 are provided and spaced apart from each other according to a preset arrangement manner, the preset arrangement manner is that the low-voltage terminals are spaced apart in the first direction X, and the structures of two ends of the protective shell 43 in the first direction X are different.

In this way, by observing the structures of two ends of the protective shell 43 in the first direction X, the arrangement direction of the low-voltage terminals 42 can be identified, such that the accuracy of the assembly direction can be improved to a certain extent when the connection terminals of the external low-voltage device are assembled with the low-voltage terminals 42, the risk of incorrect connections can be reduced to a certain extent, and the use safety can be improved. In addition, rework caused by incorrect connections can be reduced to a certain extent, and assembly efficiency can be improved to a certain extent.

Meanwhile, by adopting the solution according to the embodiments, the structure on the protective shell 43 can be made simpler compared to the above arrangement of the identification structure, thereby facilitating design and processing.

In some embodiments, the thickness of one end wall of the protective shell 43 in the first direction X is greater than the thickness of another end wall opposite to the one end wall.

The thickness refers to the dimension of the corresponding end wall in the first direction X.

By adopting the solution according to the embodiments, the installation personnel can identify the arrangement direction of the low-voltage terminals 42 simply by observing the thickness of the two end walls. In addition, the structure of the protective shell 43 is simple, thereby facilitating design and processing.

As shown in FIGs. 6 and 7, in some embodiments, the protective shell 43 is provided with a guide structure 44, the guide structure 44 being configured to guide an external connection terminal to be inserted into the protective shell 43 for electrical connection with the low-voltage terminal 42.

The guide structure 44 is a structure configured to guide an external connection terminal to be inserted into the protective shell 43, and may include a guiding surface, a guide rail, and the like, which may be specifically determined according to use requirements. The guide structure 44 may be formed by directly processing on the protective shell 43, or may be an independent structural member mounted on the protective shell 43 by bonding, insertion, or other means.

By adopting the solution according to the embodiments, the assembly of the external connection terminal is facilitated, and the assembly efficiency can be improved to a certain extent when the external connection terminal is connected to the low-voltage terminal 42.

In some embodiments, the guide structure 44 includes a guiding surface formed at the opening of the protective shell 43.

The guiding surface may include a single surface or a plurality of surfaces, and may be a flat surface or a curved surface, as long as the guiding surface can guide the external connection terminal to be inserted into the protective shell 43.

The guide structure 44 may include only the above guiding surface, or may further include other structures, such as a guide rail or a protruding rib, in addition to the above guiding surface, which may be specifically determined according to use requirements.

By adopting the structure according to the embodiments, the guide structure 44 has a simple structure, which facilitates design and processing.

In some embodiments, the area of the opening enclosed by the guiding surface gradually decreases from outside to inside in the depth direction of the protective shell 43.

In the embodiments, the guiding surface may be a conical surface or a quasi-conical surface, such that the guiding surface has a simple structure, which facilitates design and processing.

In some embodiments, the target member and the protective shell 43 are both insulating members.

The insulating member may be a member body made of non-conductive materials, or may contain conductive materials inside, with all parts in contact with the external space being made of non-conductive materials.

By adopting the solution according to the embodiments, the use safety of the high-voltage power distribution device 400 can be improved to a certain extent.

In some embodiments, the target member and the protective shell 43 are both injection-molded members.

Injection molding is a method for manufacturing and shaping industrial products. The target member and the protective shell 43 are both injection-molded members, which means that the target member and the protective shell 43 can both be manufactured by an injection-molding method. Specifically, the target member and the protective shell may be manufactured using plastic materials by the injection-molding method, or may be manufactured using rubber materials by the injection-molding method, or may be manufactured using plastic materials by the injection-molding method. Plastic materials are mainly divided into thermoplastic and thermosetting plastics according to the molecular structure of synthetic resin. Thermoplastic plastics refer to plastics that remain malleable upon repeated heating, and mainly include commonly used raw materials such as polyethylene (PE) and polypropylene (PP). Thermosetting plastics mainly refer to plastics made from synthetic resins hardened by heating, such as some phenolic plastics and amino plastics.

The target member and the protective shell 43 are injection-molded members that are easy to manufacture at low cost.

In some embodiments, the protective shell 43 and the target member are integrally formed.

In this way, the protective shell 43 and the target member have a stable structure, facilitating processing.

As shown in FIG. 8, in some embodiments, the second end of the low-voltage terminal 42 is at least partially located in the mounting cavity and is in electrical contact with the output terminal of the low-voltage circuit.

The electrical contact may be electrical connection achieved by welding, gold finger connections, or other means.

By adopting the solution according to the embodiments, the conductive member between the low-voltage terminal 42 and the low-voltage circuit can be removed, thereby saving space in the housing 40.

As shown in FIG. 8, in some embodiments, the second end of the low-voltage terminal 42 is located in the side wall of the target member, and the second end of the low-voltage terminal 42 is provided with an electrical contact part 47 extending into the mounting cavity, the electrical contact part 47 being in electrical contact with the output terminal of the low-voltage circuit.

The electrical contact part 47 may be a component capable of achieving electrical connection to the output terminal of the low-voltage circuit through contact, such as an electrical connector, a gold finger, or a contact point. The electrical contact part may be integrally formed on the low-voltage terminal 42, or may be a component that is independent of the low-voltage terminal 42 and connected to the low-voltage terminal 42 by welding, insertion, or other means.

By adopting the solution according to the embodiments, the volume of the electrical contact part 47 can be relatively small, thereby avoiding excessive occupation of the internal space of the housing 40.

According to some embodiments of the present application, the present application further provides a battery. The battery includes the high-voltage power distribution device according to any one of the above solutions.

Since the battery according to the embodiments of the present application includes the high-voltage power distribution device of any one of the above solutions, the number of components in the high-voltage power distribution device can be reduced to a certain extent, and the area occupied by the high-voltage power distribution device is decreased, thereby facilitating the miniaturization design of the battery.

According to some embodiments of the present application, the present application further provides an electric device. The electric device includes the battery according to any one of the above solutions, and the battery is configured to provide electrical energy for the electric device.

The electric device may be any one of the aforementioned devices or systems that use the battery.

Since the electric device according to the embodiments of the present application includes the battery of any one of the above solutions, the number of components in the high-voltage power distribution device can be reduced to a certain extent, and the area occupied by the high-voltage power distribution device and the battery is decreased, thereby facilitating the miniaturization design of the electric device.

As shown in FIGs. 1 to 8, the embodiments of the present application provide a high-voltage power distribution device 400. The high-voltage power distribution device 400 includes a housing 40, a cover body 41, and a low-voltage terminal 42. The housing 40 has an opening. The cover body 41 covers the opening and defines, in an enclosing manner, a mounting cavity together with the housing 40. The low-voltage terminal 42 is integrated on a target member. The target member is the housing 40 or the cover body 41. The first end of the low-voltage terminal 42 is exposed outside the mounting cavity, and the second end of the low-voltage terminal 42 is electrically connected to a low-voltage circuit in the housing 40.

At least one side wall of the target member is provided with a protective shell 43 having an outward-facing opening, and the first end of the low-voltage terminal 42 is located in the protective shell 43. The protective shell 43 is embedded on the target member. The protective shell 43 at least partially protrudes from the side wall of the target member. The target member and the protective shell 43 are both plastic members. The protective shell 43 and the target member are integrally formed.

A plurality of low-voltage terminals 42 are provided and spaced apart from each other according to a preset arrangement manner, and the protective shell 43 is provided with an identification structure configured to indicate the preset arrangement manner.

A plurality of low-voltage terminals 42 are provided and spaced apart from each other according to a preset arrangement manner, the preset arrangement manner is that the low-voltage terminals are spaced apart in the first direction X, and one end of the protective shell 43 in the first direction X is provided with a protruding part 46. The protruding part 46 is disposed on one end wall of the protective shell 43 in the first direction X. The protruding part 46 and the protective shell 43 are integrally formed. The thickness of one end wall of the protective shell 43 in the first direction X is greater than the thickness of another end wall opposite to the one end wall.

The protective shell 43 is provided with a guide structure 44, the guide structure 44 being configured to guide an external connection terminal to be inserted into the protective shell 43 for electrical connection with the low-voltage terminal 42. The guide structure 44 includes a guiding surface formed at the opening of the protective shell 43. The area of the opening enclosed by the guiding surface gradually decreases from outside to inside in the depth direction of the protective shell 43. The guiding surface may be a conical surface or a quasi-conical surface.

The second end of the low-voltage terminal 42 is at least partially located in the mounting cavity and is in electrical contact with the output terminal of the low-voltage circuit. The second end of the low-voltage terminal 42 is located in the side wall of the target member, and the second end of the low-voltage terminal 42 is provided with an electrical contact part 47 extending into the mounting cavity, the electrical contact part 47 being in electrical contact with the output terminal of the low-voltage circuit.

The high-voltage power distribution device 400 according to the embodiments of the present application effectively simplifies the assembly process of the high-voltage power distribution device 400 by integrally injection molding the low-voltage connector with the housing body of the high-voltage box. Additionally, the overall usage of plastic materials is reduced, thereby lowering costs.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A high-voltage power distribution device, comprising:
a housing, having an opening;
a cover body, covering the opening and defining, in an enclosing manner, a mounting cavity together with the housing; and
a low-voltage terminal, integrated on a target member, wherein the target member is the housing or the cover body, a first end of the low-voltage terminal is exposed outside the mounting cavity, and a second end of the low-voltage terminal is electrically connected to a low-voltage circuit in the housing.

2. The high-voltage power distribution device according to claim 1, wherein at least one side wall of the target member is provided with a groove, and the first end of the low-voltage terminal is located in the groove.

3. The high-voltage power distribution device according to claim 1, wherein at least one side wall of the target member is provided with a protective shell having an outward-facing opening, and the first end of the low-voltage terminal is located in the protective shell.

4. The high-voltage power distribution device according to claim 3, wherein the protective shell is embedded on the target member.

5. The high-voltage power distribution device according to claim 3, wherein the protective shell at least partially protrudes from the side wall of the target member.

6. The high-voltage power distribution device according to any one of claims 1-5, wherein a plurality of low-voltage terminals are provided and spaced apart from each other according to a preset arrangement manner, and the protective shell is provided with an identification structure configured to indicate the preset arrangement manner.

7. The high-voltage power distribution device according to any one of claims 3-5, wherein a plurality of low-voltage terminals are provided and spaced apart from each other according to a preset arrangement manner, the preset arrangement manner is that the low-voltage terminals are spaced apart in a first direction, and one end of the protective shell in the first direction is provided with a protruding part.

8. The high-voltage power distribution device according to claim 7, wherein the protruding part is disposed on one end wall of the protective shell in the first direction.

9. The high-voltage power distribution device according to claim 7, wherein the protruding part and the protective shell are integrally formed.

10. The high-voltage power distribution device according to any one of claims 3-5, wherein a plurality of low-voltage terminals are provided and spaced apart from each other according to a preset arrangement manner, the preset arrangement manner is that the low-voltage terminals are spaced apart in a first direction, and structures of two ends of the protective shell in the first direction are different.

11. The high-voltage power distribution device according to claim 10, wherein a thickness of one end wall of the protective shell in the first direction is greater than a thickness of another end wall opposite to the one end wall.

12. The high-voltage power distribution device according to any one of claims 3-5, wherein the protective shell is provided with a guide structure, the guide structure being configured to guide an external connection terminal to be inserted into the protective shell for electrical connection with the low-voltage terminal.

13. The high-voltage power distribution device according to claim 12, wherein the guide structure comprises a guiding surface formed at the opening of the protective shell.

14. The high-voltage power distribution device according to claim 13, wherein an area of an opening enclosed by the guiding surface gradually decreases from outside to inside in a depth direction of the protective shell.

15. The high-voltage power distribution device according to any one of claims 3-5, wherein the target member and the protective shell are both insulating members;
and/or the target member and the protective shell are both injection-molded members.

16. The high-voltage power distribution device according to any one of claims 3-5, wherein the protective shell and the target member are integrally formed.

17. The high-voltage power distribution device according to any one of claims 1-5, wherein the second end of the low-voltage terminal is at least partially located in the mounting cavity and is in electrical contact with an output terminal of the low-voltage circuit.

18. The high-voltage power distribution device according to any one of claims 1-5, wherein the second end of the low-voltage terminal is located in the side wall of the target member, and the second end of the low-voltage terminal is provided with an electrical contact part extending into the mounting cavity, the electrical contact part being in electrical contact with an output terminal of the low-voltage circuit.

19. A battery, comprising the high-voltage power distribution device according to any one of claims 1-18.

20. An electric device, comprising the battery according to claim 19.
